(19) Europäisches Patentamt
European Patent Office
Office européen des brevets

(11) EP 4 276 966 A1

(12) # EUROPEAN PATENT APPLICATION
published in accordance with Art. 153(4) EPC

(43) Date of publication:
**15.11.2023 Bulletin 2023/46**

(21) Application number: **21917902.5**

(22) Date of filing: **07.12.2021**

(51) International Patent Classification (IPC):
***H01M 10/0567*** *(2010.01)* ***H01M 6/16*** *(2006.01)*
***H01M 10/052*** *(2010.01)*

(52) Cooperative Patent Classification (CPC):
**H01M 4/525; H01M 6/16; H01M 10/052; H01M 10/0525; H01M 10/0567; H01M 10/0568;**
H01M 2300/0025; Y02E 60/10

(86) International application number:
**PCT/KR2021/018481**

(87) International publication number:
**WO 2022/149740 (14.07.2022 Gazette 2022/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.01.2021 KR 20210002216**

(71) Applicant: **Samsung SDI Co., Ltd.**
**Yongin-si, Gyeonggi-do 17084 (KR)**

(72) Inventors:
- **TSAY, Olga**
  **Yongin-si, Gyeonggi-do 17084 (KR)**
- **PARK, Hye Jin**
  **Yongin-si, Gyeonggi-do 17084 (KR)**
- **SHATUNOV, Pavel**
  **Yongin-si, Gyeonggi-do 17084 (KR)**
- **KIM, Sang Hyung**
  **Yongin-si, Gyeonggi-do 17084 (KR)**
- **PARK, Sang Woo**
  **Yongin-si, Gyeonggi-do 17084 (KR)**
- **WOO, Myung Heui**
  **Yongin-si, Gyeonggi-do 17084 (KR)**
- **RYU, Bo Kyung**
  **Yongin-si, Gyeonggi-do 17084 (KR)**
- **CHO, Won Seok**
  **Yongin-si, Gyeonggi-do 17084 (KR)**

(74) Representative: **Gulde & Partner**
**Patent- und Rechtsanwaltskanzlei mbB**
**Wallstraße 58/59**
**10179 Berlin (DE)**

(54) **ELECTROLYTE FOR LITHIUM BATTERY, AND LITHIUM BATTERY COMPRISING SAME**

(57) An electrolyte for a lithium battery and a lithium battery including the same are provided. The electrolyte for a lithium battery may include: a lithium salt; a non-aqueous organic solvent; and an additive including a compound represented by Formula 1.

EP 4 276 966 A1

FIG. 1

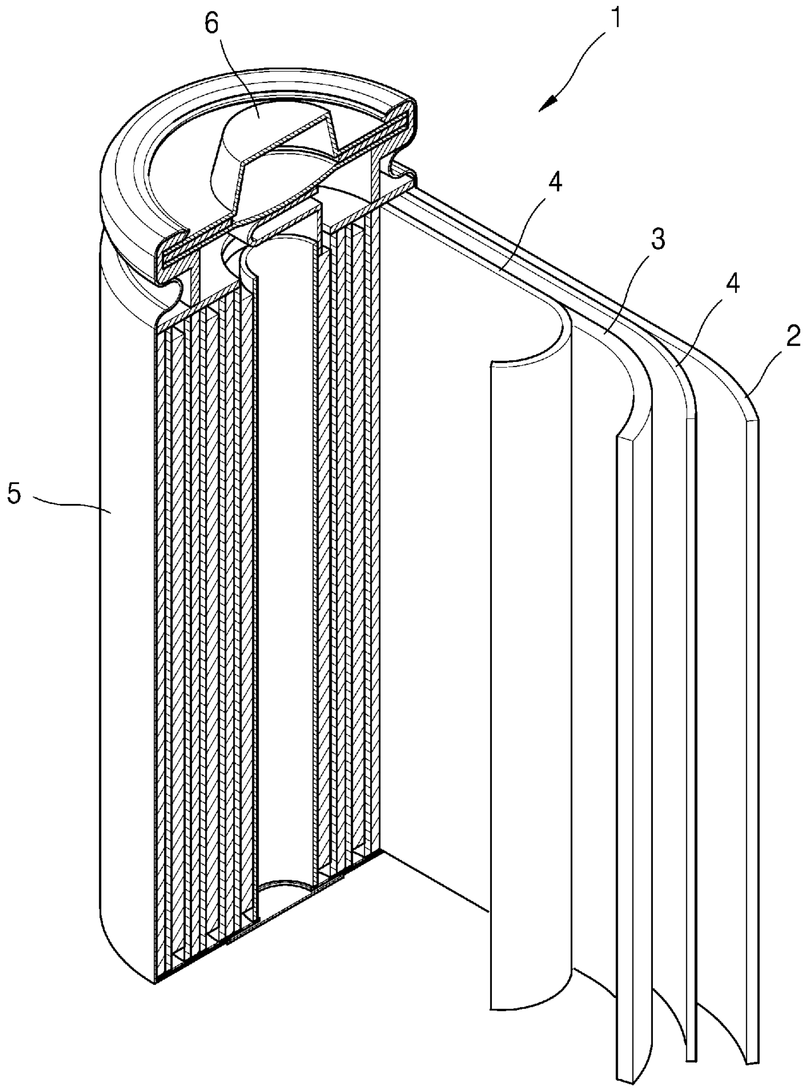

## Description

TECHNICAL FIELD

The present disclosure relates to an electrolyte for a lithium battery and a lithium battery including the same.

BACKGROUND ART

Lithium batteries have energy density per unit weight that is three times higher than that of a lead-acid battery, a nickel-cadmium battery, a nickel-hydrogen battery, a nickel-zinc battery, and the like in the art, and can be charged at high speed.

Since a lithium secondary battery operates at a high driving voltage, an aqueous electrolyte solution having high reactivity with lithium cannot be used. Instead, an organic electrolyte solution is generally in a lithium secondary battery. The organic electrolyte solution is prepared by dissolving a lithium salt in a non-aqueous organic solvent. For use as the non-aqueous organic solvent, a material stable at a high voltage and having high ionic conductivity and dielectric permittivity and low viscosity is preferable.

However, use of the organic electrolyte solution as an electrolyte for a lithium secondary battery may cause degradation in capacity and lifespan characteristics of the lithium secondary battery due to side reactions between an electrolyte and a negative electrode/positive electrode.

In order to compensate for this point, an additive is used in the electrolyte for a lithium secondary battery. However, additives used so far do not provide sufficient capacity and lifespan characteristics of a battery over a wide temperature range between a low temperature below zero and a high temperature.

Thus, there is still a need for an electrolyte for a lithium battery and a lithium battery including the same, the electrolyte capable of providing sufficient capacity and lifespan characteristics of a battery over a wide temperature range between a low temperature below zero and a high temperature.

DESCRIPTION OF EMBODIMENTS

TECHNICAL PROBLEM

One aspect is to provide an electrolyte for a lithium battery, including a novel electrolyte additive.

Another aspect is to provide a lithium battery including the electrolyte.

SOLUTION TO PROBLEM

According to an aspect of the disclosure, an electrolyte for a lithium battery includes:

a lithium salt;
a non-aqueous organic solvent; and
an additive including a compound represented by Formula 1:

Formula 1

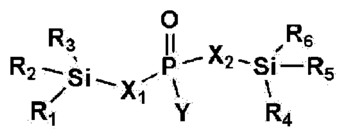

wherein, in Formula 1,

$X_1$ and $X_2$ may each independently be -O- or -N-;
Y may be a halogen atom or a substituted or unsubstituted C1-C10 alkoxy group; and
$R_1$, $R_2$, $R_3$, $R_4$, $R_5$, and $R_6$ may each independently be a substituted or unsubstituted C1-C10 alkyl group, a substituted or unsubstituted C2-C10 alkenyl group, a substituted or unsubstituted C3-C10 alkynyl group, a substituted or unsubstituted C3-C20 cycloalkyl group, a substituted or unsubstituted C6-C50 aryl group, a substituted or unsubstituted C6-C50 alkylaryl group, or a substituted or unsubstituted C6-C50 heteroaryl group.

The compound represented by Formula 1 may be represented by Formula 2:

Formula 2

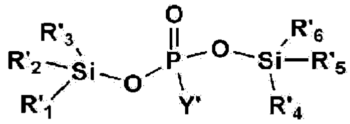

wherein, in Formula 2,

Y' may be a halogen atom or a substituted or unsubstituted C1-C10 alkoxy group; and
$R'_1$, $R'_2$, $R'_3$, $R'_4$, $R'_5$, and $R'_6$ may each independently be a substituted or unsubstituted C1-C10 alkyl group, a substituted or unsubstituted C2-C10 alkenyl group, a substituted or unsubstituted C3-C20 cycloalkyl group, a substituted or unsubstituted C6-C50 aryl group, or a substituted or unsubstituted C6-C50 alkylaryl group.

The compound represented by Formula 1 may be represented by Formula 3:

Formula 3

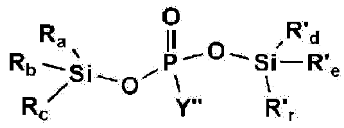

wherein, in Formula 3,

Y" may be a halogen atom; and
$R_a$, $R_b$, $R_c$, $R_d$, $R_e$, and Rf may each independently be an unsubstituted C1-C10 alkyl group, a C1-C10 alkyl group substituted with a halogen atom, an unsubstituted C2-C10 alkenyl group, a C2-C10 alkenyl group substituted with a halogen atom, an unsubstituted C6-C50 alkylaryl group, or a C6-C50 alkylaryl group substituted with a halogen atom.

The compound represented by Formula 1 may be represented by Formulae 4 to 12:

Formula 4

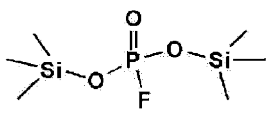

Formula 5

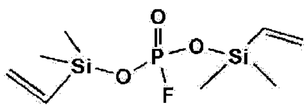

Formula 6

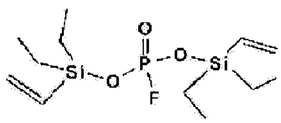

Formula 7

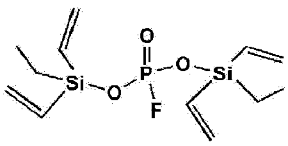

Formula 8

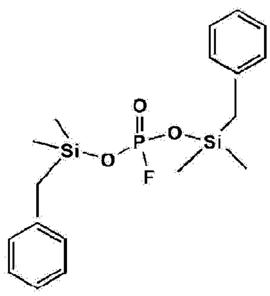

Formula 9

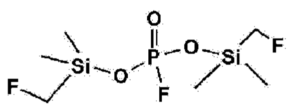

Formula 10 Formula 11 Formula 12

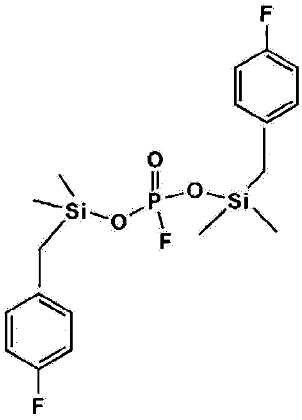

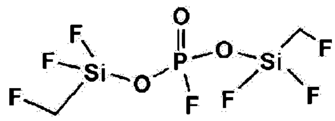

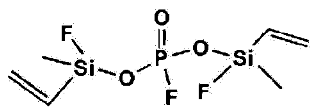

.

The amount of the additive may be in a range of 0.01 wt% to 10 wt% based on the total weight of the electrolyte.

The electrolyte may further include a cyclic carbonate-based compound, and

The cyclic carbonate-based compound may be selected from: fluoroethylene carbonate (FEC); FFC substituted with at least one substituent selected from a halogen atom, a cyano group (CN), and a nitro group ($NO_2$); vinyl ethylene carbonate (VEC); VEC substituted with at least one substituent selected from a halogen atom, CN, and $NO_2$; vinylene carbonate (VC); and VC substituted with at least one substituent selected from a halogen atom, CN, and $NO_2$.

The electrolyte may further include at least one selected from a sultone-based compound, a nitride-based compound, and a cyanide-based compound.

The sultone-based compound may be: sultone; or propane sultone substituted with at least one substituent selected from a halogen atom, a cyano group, a nitro group, a trifluoromethanesulfonic group, a pentafluoroethanesulfonyl group ($SO_2C_2F_5$), a pentafluorophenyl group ($C_6F_5$), a methanesulfonyl group ($SO_2CF_3$), a phenylsulfonyl group ($SO_2Ph$), and a methylester group ($COOCH_3$).

The nitride-based compound may be succinonitrile.

The cyanide-based compound may be 1,3,6-hexane tri-cyanide (HTCN) or 1,2,6-(HTCN).

The amount of the sultone-based compound, the nitride-based compound, or the cyanide-based compound may be in a range of 0.01 wt% to 5 wt% based on the total weight of the electrolyte.

The lithium salt may include at least one selected from $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$(where $2 \leq x \leq 20$ and $2 \leq y \leq 20$), LiCl, and LiI.

The non-aqueous organic solvent may include at least one selected from ethylene carbonate (EC), propylene carbonate (PC), ethylmethyl carbonate (EMC), methylpropyl carbonate, ethylpropyl carbonate, dimethyl carbonate (DMC), diethyl carbonate (DEC), dipropyl carbonate, vinylethylene carbonate (VEC), butylene carbonate, ethyl propionate (EP), propyl propionate (PP), ethyl butylate, dimethyl sulfoxide, dimethyl formamide, dimethyl acetamide, gamma-valerolactone, gamma-butyrolactone, and tetrahydrofuran.

According to another aspect, a lithium battery includes:

a positive electrode including a positive electrode active material;
a negative electrode including a negative electrode active material; and
an electrolyte disposed between the positive electrolyte and the negative electrode.

The negative electrode active material may include a carbon-based material, a silicon-based material, or a silicon-carbon-based composite.

The negative electrode active material may include amorphous, plate-like, flake-like, spherical, or fibrous graphite, such as natural graphite or artificial graphite.

The lithium battery may further include a separator between the positive electrode and the negative electrode.

ADVANTAGEOUS EFFECTS OF DISCLOSURE

The electrolyte for a lithium battery according to one aspect includes an additive including a compound represented by Formula 1. A lithium battery including the electrolyte may have improved discharge capacity (ratio) and lifespan characteristics at a low temperature (-10 °C) below zero and a high temperature (45 °C).

BRIEF DESCRIPTION OF DRAWING

FIG. 1 is a schematic view of a lithium battery according to an embodiment.

BEST MODE

MODE OF DISCLOSURE

Hereinafter, an electrolyte for a lithium battery and a lithium battery including the same will be described in detail with reference to embodiments and drawings of the present disclosure. These examples are only presented by way of example to explain the present disclosure in more detail, and it will be apparent to those skilled in the art that the scope of the present disclosure is not limited by these examples..

Unless otherwise defined, all technical and scientific terms used in the present specification have the same meaning as commonly understood by those skilled in the art to which the disclosure belongs to. In case of conflict, the present specification including definitions is considered in priority.

Although methods and materials similar or equivalent to those described herein can be used in the practice or testing of the present disclosure, suitable methods and materials are described herein. An expression used in the singular encompasses the expression of the plural, unless it has a clearly different meaning in the context.

It will be further understood that the terms "comprises" or "includes" when used in the present specification, specify the presence of stated features, regions, integers, steps, operations, elements, and/or components, but do not preclude the presence or addition of one or more other features, regions, integers, steps, operations, elements, components, and/or groups thereof.

The term "a combination thereof" as used herein means a mixture or combination of one or more of the aforementioned elements.

The term "and/or" as used herein is meant to include any and all combinations of one or more of the items listed in relation thereto. The term "or" as used herein means "and/or". The expression "at least one" or "one or more" used in front of components in the present specification is meant to supplement a list of all components means, and does not imply to supplement individual components of the description.

In the drawings, thicknesses may be magnified or exaggerated to clearly illustrate various layers and regions. Like reference numbers may refer to like elements throughout the drawings and the following description. It will be understood that when one element, layer, film, section, sheet, etc. is referred to as being "on" another element, it can be directly on the other element or intervening elements may be present therebetween. Although the terms "first," "second," etc. may be used herein to describe various elements, these elements should not be limited by these terms. These terms are only used to distinguish one element from another element.

An electrolyte for a lithium battery according to an embodiment may include: a lithium salt; a non-aqueous organic solvent; and an additive including a compound represented by Formula 1:

Formula 1

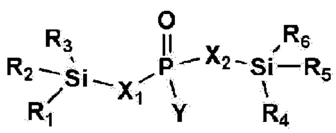

wherein, in Formula 1,

$X_1$ and $X_2$ may each independently be -O- or -N-;
Y may be a halogen atom or a substituted or unsubstituted C1-C10 alkoxy group; and
$R_1$, $R_2$, $R_3$, $R_4$, $R_5$, and $R_6$ may each independently be a substituted or unsubstituted C1-C10 alkyl group, a substituted or unsubstituted C2-C10 alkenyl group, a substituted or unsubstituted C3-C10 alkynyl group, a substituted or unsubstituted C3-C20 cycloalkyl group, a substituted or unsubstituted C6-C50 aryl group, a substituted or unsubstituted C6-C50 alkylaryl group, or a substituted or unsubstituted C6-C50 heteroaryl group.

The electrolyte for a lithium battery according to an embodiment may include, as an additive, the compound represented by Formula 1. The compound may be an additive having a symmetric structure in which silyl groups are located on both sides of a center at which a phosphorus (P) element and an oxygen (O) element form a double bond (-P=O). A lithium battery using the electrolyte that includes the additive may have improved discharge capacity (ratio) and lifespan characteristics at a low temperature (-10 °C) below zero and a high temperature (45 °C).

The reason for improving the discharge capacity (ratio) at a low temperature below zero (-10 °C) and a high temperature (45 °C) and lifespan characteristics of a lithium battery by adding the compound represented by Formula 1 as an additive to the electrolyte for a lithium battery will be described in detail below. However, the description below is to help understanding the present disclosure, and are not for purposes of limiting the scope of the present disclosure thereto.

When the compound represented by Formula 1 is included as an additive in the electrolyte, a cathode electrolyte interphase (CEI) film may be formed on a surface of a positive electrode. The CEI film strongly interacts with metal ions of a metal oxide included in a positive electrode active material so that the reaction center at the interface between the electrolyte and a positive electrode can be completely capped to be deactivated. In addition, the CEI film may prevent generation of by-products, such as gas or/and HF, by preventing oxidation of a solvent included in the electrolyte, and may also prevent the elusion of metal ions of a metal oxide included in a positive electrode active material. Accordingly, in a lithium battery including the electrolyte, resistance at the interface between the electrolyte and a positive electrode is lowered so that lithium ion conductivity may be improved while a low-temperature discharge voltage may increase. As a result, the lithium battery may have improved cycle stability and rate performance.

In addition, the additive may have a symmetric structure in which silyl groups are located on both sides of a center at which a phosphorus (P) element and an oxygen (O) element form a double bond (-P=O). Such an additive may have a high concentration of silyl groups compared to an additive having a structure in which a silyl group is located only on one side. On a surface of a negative electrode, a highly polar and stable solid electrolyte interphase (SEI) film may be formed. Resistance at the interface between the electrolyte and a negative electrode may be lowered so that lithium ion conductivity may be improved while a low-temperature discharge voltage may increase.

For example, the compound represented by Formula 1 may include a compound represented by Formula 2:

Formula 2

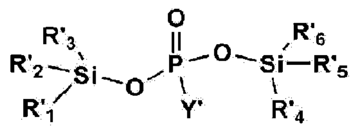

wherein, in Formula 2,

Y' may be a halogen atom or a substituted or unsubstituted C1-C10 alkoxy group; and

$R'_1$, $R'_2$, $R'_3$, $R'_4$, $R'_5$, and $R'_6$ may each independently be a substituted or unsubstituted C1-C10 alkyl group, a substituted or unsubstituted C2-C10 alkenyl group, a substituted or unsubstituted C3-C20 cycloalkyl group, a substituted or unsubstituted C6-C50 aryl group, or a substituted or unsubstituted C6-C50 alkylaryl group.

For example, the compound represented by Formula 1 may include a compound represented by Formula 3:

Formula 3

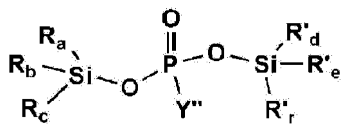

wherein, in Formula 3,

Y" may be a halogen atom; and

$R_a$, $R_b$, $R_c$, $R_d$, $R_e$, and Rf may each independently be an unsubstituted C1-C10 alkyl group, a C1-C10 alkyl group substituted with a halogen atom, an unsubstituted C2-C10 alkenyl group, a C2-C10 alkenyl group substituted with a halogen atom, an unsubstituted C6-C50 alkylaryl group, or a C6-C50 alkylaryl group substituted with a halogen atom.

For example, the compound represented by Formula 1 may include a compound represented by Formulae 4 to 12:

Formula 4

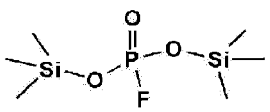

Formula 5

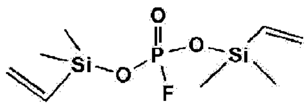

Formula 6

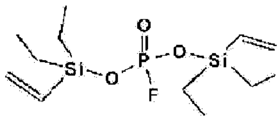

Formula 7

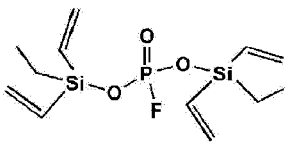

Formula 8

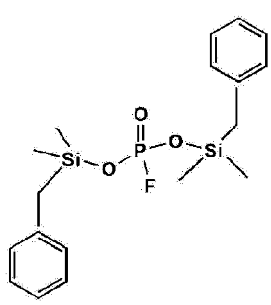

Formula 9

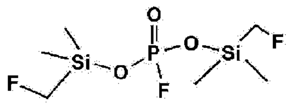

Formula 10

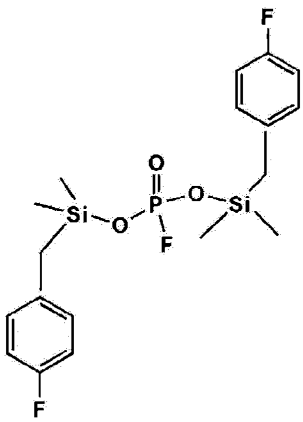

Formula 11

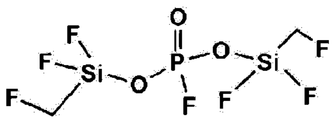

Formula 12

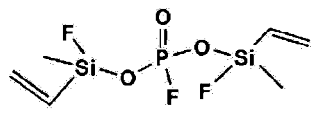

The amount of the additive may be in a range of 0.01 wt% to 10 wt% based on the total weight of the electrolyte. For example, the amount of the additive may be, based on the total weight of the electrolyte, in a range of 0.01 wt% to 9 wt%, 0.01 wt% to 8 wt%, 0.01 wt% to 7 wt%, 0.01 wt% to 6 wt%, 0.01 wt% to 5 wt%, 0.01 wt% to 4 wt%, 0.01 wt% to 3 wt%, or 0.01 wt% to 2 wt%. By including the electrolyte within the ranges above, the lithium battery may have improved discharge capacity (ratio) and lifespan characteristics at a low temperature (-10 °C) below zero and a high temperature (45 °C).

The electrolyte may further include a cyclic carbonate-based compound, and the cyclic carbonate-based compound may be selected from: fluoroethylene carbonate (FEC); FEC substituted with at least one substituent selected from a halogen atom, a cyano group (CN), and a nitro group ($NO_2$); vinylethylene carbonate (VEC); VEC substituted with at least one substituent selected from a halogen atom, CN, and $NO_2$; vinylene carbonate (VC); and VC substituted with at least one substituent selected from a halogen atom, CN, and $NO_2$.

The amount of the cyclic carbonate-based compound may be in a range of 0.01 wt% to 10 wt% based on the total weight of the electrolyte. For example, the amount of the cyclic carbonate-based compound may be in a range of 0.1 wt% to 10 wt% or 0.5 wt% to 10 wt%, based on the total weight of the electrolyte.

An SEI film formed by a reaction between the cyclic carbonate-based compound and either of a negative electrode active material or a negative electrode surface may have more flexible characteristics. Accordingly, the lifespan characteristics of the lithium battery may be further improved.

The electrolyte may further include at least one selected from a sultone-based compound, a nitride-based compound, and a cyanide-based compound, wherein the sultone-based compound may include: propane sultone; or propane sultone substituted at least one substituent selected from a halogen atom, a cyano group, a nitro group, a trifluoromethane sulfonyl group, a pentafluoroethane sulfonyl group ($SO_2C_2F_5$), a pentafluorophenyl group ($C_6F_5$), a

methane sulfonyl group ($SO_2CF_3$), a phenyl sulfonyl group ($SO_2Ph$), and a methyl ester group($COOCH_3$), the nitride-based compound may include succinonitrile, and the cyanide-based compound may include 1, 3, 6-hexane tri-cyanide (HTCN) or 1, 2, 6-HTCN.

The amount of the sultone-based compound, the nitride-based compound, or the cyanide-based compound may be in a range of 0.01 wt% to 10 wt% based on the total weight of the electrolyte. For example, the amount of the sultone-based compound, the nitride-based compound, or the cyanide-based compound may be in a range of 0.1 wt% to 10 wt%, 0.5 wt% to 10 wt%, or 1 wt% to 10 wt%, based on the total weight of the electrolyte. When the sultone-based compound or/and the nitride-based compound is further added to the electrolyte, the interfacial resistance of a negative electrode may be lowered and the thermal stability is improved, and thus the lifespan characteristics of lithium battery at a high temperature may be further improved. When the cyanide-based compound is further added to the electrolyte, the thickness of the lithium battery may be reduced, and accordingly, the stability of the battery against thermal shock may be improved.

The lithium salt may include at least one selected from $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$(where $2 \leq x \leq 20$ and $2 \leq y \leq 20$), LiCl, and LiI. In the electrolyte, the concentration of the lithium salt may be in a range of 0.01 M to 2.0 M, but is not necessarily limited thereto. An appropriate concentration may be used as needed. Within the concentration ranges above, the battery performance may be further improved.

The non-aqueous organic solvent may include at least one selected from ethylene carbonate (EC), propylene carbonate (PC), ethylmethyl carbonate (EMC), methylpropyl carbonate, ethylpropyl carbonate, dimethyl carbonate (DMC), diethyl carbonate (DEC), dipropyl carbonate, vinylethylene carbonate (VEC), butylene carbonate, ethyl propionate (EP), propyl propionate (PP), ethyl butylate, dimethyl sulfoxide, dimethyl formamide, dimethyl acetamide, gamma-valerolactone, gamma-butyrolactone, and tetrahydrofuran. However, examples are not limited thereto, and any non-aqueous organic solvent available in the art may be used.

The electrolyte may be in a liquid state or a gel state.

A lithium battery according to another embodiment may include: a positive electrode including a positive electrode active material; a negative electrode including a negative electrode active material; and the electrolyte disposed between the positive electrode and the negative electrode. The shape of the lithium battery is not particularly limited, and the lithium battery, such as a lithium ion battery, a lithium ion polymer battery, a lithium sulfur battery, and the like, may also include a lithium primary battery.

By including the electrolyte, the lithium battery may have improved discharge capacity (ratio) and lifespan characteristics at a low temperature (-10 °C) below zero and a high temperature (45 °C).

For example, the positive electrode active material may be selected from compounds represented by the following formulae: $Li_aA_{1-b}D'_bE_2$ (where $0.90 \leq a \leq 1.8$ and $0 \leq b \leq 0.5$); $Li_aG_{1-b}D'_bO_{2-c}E_c$ (where $0.90 \leq a \leq 1.8$, $0 \leq b \leq 0.5$, and $0 \leq c \leq 0.05$); $LiG_{2-b}D'_bO_{4-c}E_c$ (where $0 \leq b \leq 0.5$ and $0 \leq c \leq 0.05$); $Li_aNi_{1-b-c}CO_bD'_cE_\alpha$ (where $0.90 \leq a \leq 1.8$, $0 \leq b \leq 0.5$, $0 \leq c \leq 0.05$, and $0 < \alpha \leq 2$); $Li_aNi_{1-b-c}Co_bD'_cO_{2-\alpha}J_\alpha$ (where $0.90 \leq a \leq 1.8$, $0 \leq b \leq 0.5$, $0 \leq c \leq 0.05$, and $0 < \alpha < 2$); $Li_aNi_{1-b-c}Co_bD'_cO_{2-\alpha}J_2$ (where $0.90 \leq a \leq 1.8$, $0 \leq b \leq 0.5$, $0 \leq c \leq 0.05$, and $0 < \alpha < 2$); $Li_aNi_{1-b-c}Mn_bD'_cE_\alpha$ (where $0.90 \leq a \leq 1.8$, $0 \leq b \leq 0.5$, $0 \leq c \leq 0.05$, and $0 < \alpha \leq 2$); $Li_aNi_{1-b-c}Mn_bD'_cO_{2-\alpha}J_\alpha$ (where $0.90 \leq a \leq 1.8$, $0 \leq b \leq 0.5$, $0 \leq c \leq 0.05$, and $0 < \alpha < 2$); $Li_aNi_{1-b-c}Mn_bD'_cO_{2-\alpha}J_2$ (where $0.90 \leq a \leq 1.8$, $0 \leq b \leq 0.5$, $0 \leq c \leq 0.05$, and $0 < \alpha < 2$); $Li_aNi_bG_cL_dO_2$ (where $0.90 \leq a \leq 1.8$, $0 \leq b \leq 0.9$, $0 \leq c \leq 0.5$, and $0.001 \leq d \leq 0.2$); $Li_aNi_bG_cO_2$ (where $0.90 \leq a \leq 1.8$, $0 \leq b \leq 0.9$, and $0 \leq c \leq 0.5$); $Li_aNi_bCo_cMn_dL_eO_2$ (where $0.90 \leq a \leq 1.8$, $0 \leq b \leq 0.9$, $0 \leq c \leq 0.5$, $0 \leq d \leq 0.5$, and $0.001 \leq e \leq 0.2$); $Li_aNi_bCo_cMn_dO_2$ (where $0.90 \leq a \leq 1.8$, $0 \leq b \leq 0.9$, $0 \leq c \leq 0.5$, and $0 \leq d \leq 0.5$); $Li_aNiL_bO_2$ (where $0.90 \leq a \leq 1.8$ and $0.001 \leq b \leq 0.2$); $Li_aCoL_bO_2$ (where $0.90 \leq a \leq 1.8$ and $0.001 \leq b \leq 0.2$); $Li_aMnL_bO_2$ (where $0.90 \leq a \leq 1.8$ and $0.001 \leq b \leq 0.2$); $Li_aMn_2L_bO_4$ (where $0.90 \leq a \leq 1.8$ and $0.001 \leq b \leq 0.2$); $Li_aMn_2O_4$ (where $0.90 \leq a \leq 1.8$); $MO_2$; $MS_2$; $LiMS_2$; $V_2O_5$; $LiV_2O_5$; $LiQO_2$; $LiNiVO_4$; $Li_{(3-f)}T'_2(PO_4)_3$ (where $0 \leq f \leq 2$); $Li_{(3-f)}Fe_2(PO_4)_3$ (where $0 \leq f \leq 2$); and $LiFePO_4$.

In the formulae above, A may be selected from the group consisting of nickel (Ni), cobalt (Co), manganese (Mn), and a combination thereof, D' may be selected from aluminum (Al), Ni, Co, manganese (Mn), chromium (Cr), iron (Fe), magnesium (Mg), strontium (Sr), vanadium (V), a rare-earth element, and a combination thereof, E may be selected from the group consisting of oxygen (O), fluorine (F), sulfur (S), phosphorus (P), and a combination thereof, G may be selected from the group consisting of Co, Mn, and a combination thereof, J may be selected from the group consisting of F, S, P, and a combination thereof, L may be a transition metal or an element of a lanthanum group selected from the group consisting of Mg, calcium (Ca), Sr, barium (Ba), radium (Ra), scandium (Sc),yttrium (Y), titanium (Ti), zirconium (Zr), hafnium (Hf), rutherfordium (Rf), V, niobium (Nb), tantalum (Ta), dubnium (Db), Cr, molybdenum (Mo), tungsten (W), seaborgium (Sg), technetium (Tc), rhenium (Re), bohrium (Bh), Fe, ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), Al, gallium (Ga), indium (In), thallium (Tl), silicon (Si), germanium (Ge), tin (Sn), P, arsenic (As), antimony (Sb), bismuth (Bi), S, selenium (Se), tellurium (Te), polonium (Po), Mn, lanthanum (La), cerium (Ce), and a combination thereof, M may be selected from the group consisting of Ti, Mo, Mn, and a combination thereof, Q may be selected from the group consisting of Cr, V, Fe, Sc, Ti, Y, and a combination thereof, and T' may be selected from the group consisting

of V, Cr, Mn, Co, Ni, Cu, and a combination thereof. In detail, the positive electrode active material may be $LiCoO_2$.

The negative electrode active material may include a carbon-based material, a silicon-based material, or a silicon-carbon-based composite.

The carbon-based material may be crystalline carbon, amorphous carbon, or a mixture thereof. The crystalline carbon may be amorphous, plate-like, flake-like, spherical, or fibrous graphite, such as natural graphite or artificial graphite, and the amorphous carbon may include soft carbon (low-temperature calcined carbon), hard carbon (hard carbon), mesophase pitch carbide, calcined coke, and the like.

The silicon-based material may include a silicon particle, a silicon alloy particle, or/and a silicon nanowire. For example, the silicon-based material may include silicon particles, and an average particle diameter thereof may be in a range of 50 nm to 150 nm.

The silicon-carbon-based composite may be a composite in which silicon nanoparticles are disposed on a carbon-based compound, a composite in which silicon particles are included on a surface and inside a carbon-based compound, or a composite in which silicon particles are coated with a carbon-based compound to be included inside a carbon-based compound. The carbon-based compound of the silicon-carbon-based composite may be graphite, graphene, graphene oxide, or a combination thereof.

For example, the negative electrode active material may include an active material obtained by dispersing silicon nanoparticles having an average particle of about 200 nm or less on the carbon-based compound particles and the coating them with carbon, an active material including silicon particles on and inside graphite, or the like. The silicon nanoparticles may have an average particle diameter in a range of 50 nm to 150 nm. The silicon-carbon-based composite may have an average particle diameter in a range of, for example, 1 $\mu$m to 20 $\mu$m. The lithium battery including the negative electrode active material may have further improved initial efficiency, capacity, and lifespan characteristics.

The lithium battery may be prepared by the following method.

First, a positive electrode is prepared.

A positive electrode may be, for example, prepared according to the following method, but the preparation method is not necessarily limited thereto and may be adjusted to required conditions.

First, a positive electrode active material composition may be prepared by mixing the aforementioned positive electrode active material, a conductive material, a binder, and a solvent. The prepared positive electrode active material composition may be directly coated and dried on an aluminum current collector to form a positive electrode plate provided with a positive electrode active material layer. Alternatively, a film obtained by casting the positive electrode active material composition on a separate support and separating it from the support may be laminated on an aluminum current collector to prepare a positive electrode plate on which the positive electrode active material layer is formed.

Examples of the conductive material may be: carbon black, graphite particulates, natural graphite, artificial graphite, acetylene black, Ketjen black, carbon fibers; carbon nanotubes; metallic powder, metallic fiber, or metallic tube of copper, nickel, aluminum, silver, and the like; and a conductive polymer such as a polyphenylene derivative. However, embodiments are not limited thereto, and any suitable conductive material available in the art may be used.

Examples of the binder are a vinylidene fluoride/hexafluoropropylene copolymer, polyvinylidene fluoride, polyacrylonitrile, polymethyl methacrylate, polytetrafluoroethylene (PTFE), a mixture of the aforementioned polymers, a styrene butadiene-rubber polymer, and the like, and examples of the solvent are N-methyl pyrrolidone (NMP), acetone, water, and the like. However, embodiments are not limited thereto, and any binder and solvent available in the art may be used.

By further adding a plasticizer or a pore former to the positive electrode active material composition, pores may be formed inside an electrode plate.

The amounts of the positive electrode active material, the conductive material, the binder, and the solvent used in the positive electrode may be at levels general for use in a lithium battery. Depending on the use and configuration of the lithium battery, one or more of the conductive material, the binder, and the solvent may be omitted. The positive electrode active material may further include, in addition to the aforementioned positive electrode active material, a positive electrode active material described below.

The positive electrode active material may be a lithium-containing metal oxide, and any material available in the art may be used. For example, at least one composite oxide of lithium and a metal selected from Co, Mn, Ni, and a combination thereof may be used, and a specific example thereof may be a compound represented by one of the following formulae: $Li_aA_{1-b}B'_bD'_2$ (where $0.90 \le a \le 1$ and $0 \le b \le 0.5$); $Li_aE_{1-b}B'_bO_{2-c}D'_c$ (where $0.90 \le a \le 1$, $0 \le b \le 0.5$, and $0 \le c \le 0.05$); $LiE_{2-b}B'_bO_{4-c}D'_c$ (where $0 \le b \le 0.5$ and $0 \le c \le 0.05$); $Li_aNi_{1-b-c}Co_bB'_cD'_\alpha$ (where $0.90 \le a \le 1$, $0 \le b \le 0.5$, $0 \le c \le 0.05$, and $0 < \alpha \le 2$); $Li_aNi_{1-b-c}Co_bB'_c0_{2-\alpha}F'_\alpha$ (where $0.90 \le a \le 1$, $0 \le b \le 0.5$, $0 \le c \le 0.05$, and $0 < \alpha < 2$); $Li_aNi_{1-b-c}Co_bB'_cO_{2-\alpha}F'_2$ (where $0.90 \le a \le 1$, $0 \le b \le 0.5$, $0 \le c \le 0.05$, and $0 < \alpha < 2$); $Li_aNi_{1-b-c}Mn_bB'_cD'_\alpha$ (where $0.90 \le a \le 1$, $0 \le b \le 0.5$, $0 \le c \le 0.05$, and $0 < \alpha \le 2$); $Li_aNi_{1-b-c}Mn_bB'_cO_{2-\alpha}F'_\alpha$ (where $0.90 \le a \le 1$, $0 \le b \le 0.5$, $0 \le c \le 0.05$, and $0 < \alpha < 2$); $Li_aNi_{1-b-c}Mn_bB'_cO_{2-\alpha}F'_2$ (where $0.90 \le a \le 1$, $0 \le b \le 0.5$, $0 \le c \le 0.05$, and $0 < \alpha < 2$); $Li_aNi_bE_cG_dO_2$ (where $0.90 \le a \le 1$, $0 \le b \le 0.9$, $0 \le c \le 0.5$, and $0.001 \le d \le 0.1$.); $Li_aNi_bCo_cMn_dGeO_2$ (where $0.90 \le a \le 1$, $0 \le b \le 0.9$, $0 \le c \le 0.5$, $0 \le d \le 0.5$, and $0.001 \le e \le 0.1$); $Li_aNiG_bO_2$ (where $0.90 \le a \le 1$ and $0.001 \le b \le 0.1$); $Li_aCoG_bO_2$ (where

$0.90 \leq a \leq 1$ and $0.001 \leq b \leq 0.1$); $Li_aMnG_bO_2$ (where $0.90 \leq a \leq 1$ and $0.001 \leq b \leq 0.1$); $Li_aMn_2G_bO_4$ (where $0.90 \leq a \leq 1$ and $0.001 \leq b \leq 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3$ (where $0 \leq f \leq 2$); $Li_{(3-f)}Fe_2(PO_4)_3$ (where $0 \leq f \leq 2$); and $LiFePO_4$.

In the formulae above representing the compound, A may be Ni, Co, Mn, or a combination thereof; B' may be Al, Ni, Co, Mn, Cr, Fe, Mg, Sr, V, a rare earth element, or a combination thereof; D may be O, F, S, P, or a combination thereof; E may be Co, Mn, or a combination thereof; F' may be F, S, P, or a combination thereof; G may be Al, Cr, Mn, Fe, Mg, La, Ce, Sr, V, or a combination thereof; Q may be Ti, Mo, Mn, or a combination thereof; I' may be Cr, V, Fe, Sc, Y, or a combination thereof; and J may be V, Cr, Mn, Co, Ni, Cu, or a combination thereof.

For example, the positive electrode active material may include $LiCoO_2$, $LiMn_gO_{2g}$ (where g is 1 or 2), $LiNi_{1-g-k}Co_gAl_kO_2$ (where $0<g<1$ and $0<k\leq0.5$), $LiNi_{1-g-k}Co_gMn_kO_2$($0\leq g\leq0.5$ $0\leq k\leq0.5$), or $LiFePO_4$.

A compound in which a coating layer is additionally provided on the surface of the aforementioned compound may be also used, and a mixture of the aforementioned compound and a compound additionally provided with a coating layer may be also used. The coating layer additionally provided on the surface of the aforementioned compound may include, for example, a coating element compound, such as an oxide of a coating element, a hydroxide of a coating element, oxyhydroxide of a coating element, oxycarbonate of a coating element, or hydroxycarbonate of a coating element. The compound constituting the coating layer may be amorphous or crystalline. The coating element included in the coating layer may be Mg, Al, Co, K, Na, Ca, Si, Ti, V, Sn, Ge, Ga, B, As, Zr, or a mixture thereof. A method of forming the coating layer may be selected within a range that does not adversely affect the physical properties of the positive electrode active material. The coating method may be, for example, spray coating, dipping method, or the like. A detailed description of the coating method will be omitted because it may be well understood by those in the art.

Next, a negative electrode is prepared as follows. The negative electrode may be, for example, prepared in the same manner as in the positive electrode, except that the aforementioned negative electrode active material is used instead of the positive electrode active material. In addition, in the negative electrode active material composition, the substantially same conductive material, binder, and solvent as those used in the positive electrode preparation may be used.

For example, a negative electrode active material, a conductive material, a binder, and a solvent may be mixed to prepare a negative electrode active material composition. The negative electrode active material composition may be then directly coated on a copper current collector to prepare a negative electrode plate. Alternatively, a negative electrode active material film obtained by casting the negative electrode active material composition on a separate support and separating it from the support may be laminated on a copper current collector to prepare a negative electrode plate.

As the negative electrode active material, any suitable negative electrode active material other than the aforementioned negative electrode active material and available in the art for a lithium battery may be used. For example, the negative electrode active material may include at least one selected from lithium metal, a metal alloyable with lithium, a transition metal oxide, a non-transition metal oxide, and a carbon-based material.

Examples of the metal alloyable with lithium are Si, Sn, Al, Ge, lead (Pb), Bi, Sb), a Si-Y' alloy (where Y' is an alkali metal, an alkaline earth metal, a Group 13 element, a Group 14 element, a transition metal, a rare earth element, or a combination thereof, and Y' is not Si), and a Sn-Y' alloy (wherein Y' is an alkali metal, an alkaline earth-metal, a Group 13 element, a Group 14 element, a transition metal, a rare earth element, or a combination thereof, and Y' is not Sn). The element Y' may be, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The transition metal oxide may include, for example, a lithium titanium oxide, a vanadium oxide, a lithium vanadium oxide, and the like.

The non-transition metal oxide may be, for example, $SnO_2$, SiOx (where $0<x<2$), and the like.

The carbon-based material may be, for example, crystalline carbon, amorphous carbon, or a mixture thereof. The crystalline carbon may be, for example, amorphous, plate-like, flake-like, spherical, or fibrous graphite, such as natural graphite or artificial graphite. The amorphous carbon may be, for example, soft carbon (carbon sintered at a low temperature) or hard carbon, mesophase pitch carbide, sintered coke, and the like.

The amounts of the negative electrode active material, the conductive material, the binder, and the solvent may be at levels general for use in a lithium battery. Depending on the use and configuration of the lithium battery, one or more of the conductive material, the binder, and the solvent may be omitted.

Next, a separator to be disposed between the positive electrode and the negative electrode is prepared.

The separator may be any suitable separator commonly used in a lithium secondary battery. For use as the separator, a material having low resistance to movement of ions in an electrolyte and excellent electrolyte wettability may be used. For example, the separator may be selected from glass fiber, polyester, Teflon, polyethylene, polypropylene, polytetrafluoroethylene (PTFE), and a combination thereof, and may be in any form of a non-woven fabric or a woven fabric. For example, a rollable separator including polyethylene, polypropylene, or the like may be used for a lithium ion

battery, and a separator with excellent impregnation with an electrolyte may be used for a lithium ion polymer battery. For example, the separator may be prepared by the following method.

A separator composition may be prepared by mixing a polymer resin, a filler, and a solvent. Then, the separator composition may be directly coated on an electrode, and then dried to form a separator. Alternatively, the separator composition may be cast on a support, and then dried to form a separator film. The film may be then separated from the support and laminated on an electrode to form a separator.

The polymer used in the preparation of the separator is not particularly limited, and any material available as the binder for an electrode plate may be used. For example, a vinylidene fluoride/hexafluoropropylene copolymer, PVDF, polyacrylonitrile, polymethylmethacrylate, or a mixture thereof may be used.

Next, the aforementioned electrolyte is prepared.

The electrolyte may further include, in addition to the aforementioned electrolyte, an organic solid electrolyte or/and an inorganic solid electrolyte.

For example, as the organic solid electrolyte, a polyethylene derivative, a polyethylene oxide derivative, a polypropylene oxide derivative, a phosphate ester polymer, a polyester sulfide, polyvinyl alcohol, polyfluorinated vinylidene, or the like may be used.

For example, the solid electrolyte may be a boron oxide, a lithium oxynitride, or the like, but is not limited thereto. Any suitable solid electrolyte available in the art may be used. The inorganic solid electrolyte may be, for example, formed on the negative electrode by a method such as sputtering or the like, or a separate solid electrolyte sheet may laminated on the negative electrode.

As shown in FIG. 1, a lithium battery 1 includes a positive electrode 3, a negative electrode 2, and a composite separator 4. The positive electrode 3, the negative electrode 2, and the composite separator 4 may be wound or folded to be accommodated in a battery case 5. Then, the battery case 5 may be filled with an electrolyte, and sealed with a cap assembly 6, thereby completing the manufacture of the lithium battery 1. The battery case 5 may be cylindrical, but the shape of the battery case 5 is not necessarily limited thereto. For example, the battery case 5 may be a square-type, a thin-film type, or the like.

For example, the pouch-type lithium battery may include at least one battery assembly. The separator 4 may be disposed between the positive electrode 3 and the negative electrode 2 to form a battery assembly. The battery assembly may be laminated as a bi-cell structure, impregnated with an organic electrolyte, and accommodated and sealed in a pouch to complete the manufacture of a pouch-type lithium battery. Multiple battery assemblies are stacked to form a battery pack, and the battery pack may be used in all types of devices requiring high capacity and high output. For example, the pouch-type lithium battery may be used in a laptop computer, a smart phone, an electronic vehicle, or the like.

Since the lithium battery has excellent lifespan characteristics and excellent high-rate characteristics, the lithium battery may be used in, for example, an electric vehicle (EV). For example, the lithium battery may be used in a hybrid vehicle, such as a plug-in hybrid electric vehicle (PHEV). In addition, the lithium battery may be applicable to the fields requiring high-power storage. For example, the lithium battery may be used in a electric bicycle, a power tool, or the like.

In the present specification, a and b of the expression "Ca-Cb" refer to the number of carbon atoms of a specific functional group. That is, the functional group may include a to b carbon atoms. For example, the term "C1-C4 alkyl group" refers to an alkyl group having 1 to 4 carbon atoms, and examples thereof are $CH_3$-, $CH_3CH_2$-, $CH_3CH_2CH_2$-, $(CH_3)_2CH$-, $CH_3CH_2CH_2CH_2$-, $CH_3CH_2CH(CH_3)$-, and $(CH_3)_3C$-.

The nomenclature for a particular radical may include mono-radical or di-radical, depending on the context. For example, when a substituent requires two linkages to the rest of the molecule, the substituent should be understood as a diradical. For example, a substituent specified for an alkyl group requiring two linkages includes a diradical, such as $-CH_{2-}$, $-CH_2CH_{2-}$, $-CH_2CH(CH_3)CH_{2-}$, and the like. The nomenclature for other radicals, such as "alkylene" clearly indicates that the radical is a diradical.

In this specification, the term "alkyl group" or "alkylene group" refers to a branched or unbranched aliphatic hydrocarbon group. In an embodiment, the alkyl group may be substituted or unsubstituted. Examples of the alkyl group are a methyl group, an ethyl group, a propyl group, an isopropyl group, a butyl group, an isobutyl group, a tert-butyl group, a pentyl group, a hexyl group, a cyclopropyl group, a cyclopentyl group, a cyclohexyl group, a cycloheptyl group, and the like, but embodiments are not limited thereto. Each of these substituents may be selectively substituted or unsubstituted. In an embodiment, the alkyl group may include 1 to 6 carbon atoms. Examples of the C1-C6 alkyl group include methyl, ethyl, propyl, isopropyl, butyl, iso-butyl, sec-butyl, pentyl, 3-pentyl, hexyl, and the like, but embodiments are not limited thereto.

In the present specification, the term "cycloalkyl group" refers to a fully saturated carbocyclic ring or ring system. For example, the cycloalkyl group may be a cyclopropyl group, a cyclobutyl group, a cyclopentyl group, or a cyclohexyl group.

In this specification, the term "alkenyl group" refers to a hydrocarbon group having at least one carbon-carbon double bond and 2 to 20 carbon atoms, and examples thereof are an ethenyl group, a 1-propenyl group, a 2-propenyl

group, a 2-methyl- 1-propenyl group, a 1-butenyl group, a 2-butenyl group, a cyclopropenyl group, a cyclopentenyl group, a cyclohexenyl group, a cycloheptenyl group, and the like, but embodiments are not limited thereto. In an embodiment, the alkenyl group may be substituted or unsubstituted. In an embodiment, the alkenyl group may include 2 to 40 carbon atoms.

In the present specification, the term "alkynyl group" refers to a hydrocarbon group including 2 to 20 carbon atoms and at least one carbon-carbon triple bond, and examples thereof are an ethyny group, a 1-propynyl group, a 1-butynyl group, a 2-butynyl group, and the like. However, embodiments are not limited thereto. In an embodiment, the alkynyl group may be substituted or unsubstituted. In an embodiment, the alkynyl group may include 2 to 40 carbon atoms.

In the present specification, the term "aromatic" refers to a ring or a ring system having a conjugated pi electron system, and examples thereof are a carbocyclic aromatic groups (e.g., a phenyl group) and a heterocyclic aromatic group (e.g., pyridine). The term includes a monocyclic or fused polycyclic ring (i.e., a ring that shares adjacent pairs of atoms) as long as the entire ring system is aromatic.

In the present specification, the term "aryl group" refers to an aromatic ring or ring system in which the ring backbone includes only carbon atoms (i.e., two or more fused rings sharing two adjacent carbon atoms). When the aryl group is a ring system, each ring in the system is aromatic. For example, the aryl group may be a phenyl group, a biphenyl group, a naphthyl group, a phenanthrenyl group, a naphthacenyl group, or the like, but embodiments are not limited thereto. The aryl group may be substituted or unsubstituted.

In the present specification, the term "heteroaryl group" refers to an aromatic ring system having one ring or multiple fused rings, wherein at least one ring atom is a hetero atom that is not carbon. In a fused ring system, one or more heteroatoms can be present in only one ring. For example, the heteroatom may include oxygen, sulfur, and nitrogen, but is not necessarily limited thereto. For example, the heteroaryl group may be a furanyl group, a thienyl group, an imidazolyl group, a quinazolinyl group, a quinolinyl group, an isoquinolinyl group, a quinoxalinyl group, a pyridinyl group, a pyrrolyl group, an oxazolyl group, an indolyl group, or the like, but embodiments are not limited thereto.

In the present specification, the term "aralkyl group" or "alkylaryl group" refers to an aryl group, such as a C7-C14 aralkyl group, connected as a substituent via an alkylene group, and examples thereof are a benzyl group, a 2-phenylethyl group, a 3-phenylpropyl group, or a naphthyl alkyl group, but are not limited thereto. In an embodiment, the alkylene group refers to a lower alkylene group (i.e., a C1-C4 alkylene group).

In the present specification, the term "cycloalkenyl group" refers to a carbocyclic ring or ring system having at least one double bond, and is a ring system not having an aromatic ring. For example, the cycloalkenyl group may be a cyclohexenyl group.

In the present specification, the term "heterocyclic group" refers to a nonaromatic ring or ring system having at least one hetero atom in the ring skeleton.

In this specification, the term "halogen" refers to a stable element belonging to Group 17 of the Periodic Table of Elements, and for example, may be fluorine, chlorine, bromine or iodine, and particularly may be fluorine and/or chlorine.

In the present specification, substituents are derived by exchanging at least one hydrogen with other atoms or a functional group in an unsubstituted mother group. Unless otherwise stated, when a function group is considered "substituted", the functional group is considered substituted with at least one substitute selected from a C1-C40 alkyl group, a C2-C40 alkenyl group, a C3-C40 cycloalkyl group, a C3-C40 cycloalkenyl group, a c1-C40 alkyl group, and a C7-C40 aryl group. When a functional group is described as being "selectively substituted", the functional group is considered substituted with the aforementioned substituent.

The disclosure is in greater details through Examples and Comparative Examples below. However, the following embodiments are for illustrative purpose only and shall not be construed as limiting the scope of the disclosure.

(Synthesis of additive)

**Synthesis of Example 1: Compound of Formula 5 (bis(dimethylvinylsilyl)phosphorofluoridate))**

A compound of Formula 5 was synthesized as follows.

Sodium fluorophosphate (9.96 g, 0.07 mol) was added to chloro(dimethyl)vinyl silane (25.05 g, 0.21 mol) at 25 °C (room temperature). DMF (35 ml) was added to the reaction mixture, and then stirred at 25 °C for 20 hours. Subsequently, the white precipitate was filtered, and the filtrate was purified by fractional distillation to obtain colorless oil (9.5 g, 50 %).

$^{1}H$ NMR (400 MHz, $CDCl_3$) $\delta$ = 0.37 (s, 12H), 5.85-5.91 (dd, 2H), 6.06-6.19 (m, 4H).

$^{19}F$ NMR (376.17 MHz, $CDCl_3$) $\delta$ = -71.96 (d, $^{1}JFP$ = 935 Hz).

$^{31}P$ NMR (161.83 MHz, $CDCl_3$) $\delta$ = -26.0 (d, $^{1}JFP$ = 935 Hz).

Formula 5

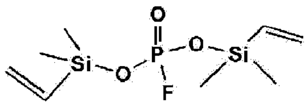

**Synthesis Example 2: Compound of Formula 13 (O,O-diethvl N-methyl N-(trimethylsilyl)phosphoramidate)**

A compound of Formula 13 was synthesized as follows.

Diethyl phosphorochloridate (4.66 g, 0.027 mol) was slowly added to N,N-bis(trimethylsilyl)methylamine (5.26 g, 0.03 mol) at 25 °C (room temperature). The reaction mixture was stirred at 25 °C for 24 hours. After distillation, the resulting product was obtained as colorless liquid (4.56 g, 70 %).

$^{1}H$ NMR (400 MHz, $CDCl_3$) $\delta$ = 0.20 (s, 9H), 1.27 (t, 6H), 2.55 (d, 3H), 3.89-4.01 (m, 4H).

$^{31}P$ NMR (161.83 MHz, $CDCl_3$) $\delta$ = -11.96.

Formula 13

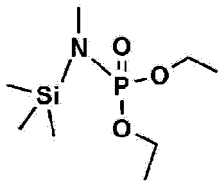

(Preparation of electrolyte)

Example 1: 0.25 wt% of Compound Formula 5 and 5 wt% of FEC

1.2 M $LiPF_6$ was added to a solvent in which ethylene carbonate (EC), propylene carbonate (PC), ethyl propionate (EP), and propyl propionate (PP) were mixed at a volume ratio of 2:1:4:3. Then, 5 wt% of fluoroethylene carbonate (FEC) and 0.25 wt% of the compound of Formula 5 synthesized according to Synthesis Example 1 were added to the mixed solvent to prepare an electrolyte.

**Example 2: 0.5 wt% of Compound of Formula 5**

An electrolyte was prepared in the same manner as in Example 1, except that 0.5 wt% of the compound of Formula 5 synthesized according to Synthesis Example 1 was added to the mixed solvent.

**Example 3: 1 wt% of Compound of Formula 5**

An electrolyte was prepared in the same manner as in Example 1, except that 1 wt% of the compound of Formula 5 synthesized according to Synthesis Example 1 was added to the mixed solvent.

**Example 4: 2 wt% of Compound of Formula 5**

An electrolyte was prepared in the same manner as in Example 1, except that 2 wt% of the compound of Formula 5 synthesized according to Synthesis Example 1 was added to the mixed solvent.

**Comparative Example 1**

1.2 M $LiPF_6$ was added to a solvent in which EC, PC, EP, and PP were mixed at a volume ratio of 2:1:4:3 to prepare an electrolyte.

**Comparative Example 2: 1 wt% of Compound of Formula 13**

An electrolyte was prepared in the same manner as in Example 1, except that 1 wt% of the compound of Formula 13 synthesized according to Synthesis Example 2 was added to the mixed solvent.

**Comparative Example 3: 2 wt% of Compound of Formula 13**

An electrolyte was prepared in the same manner as in Example 1, except that 2 wt% of the compound of Formula 13 synthesized according to Synthesis Example 2 was added to the mixed solvent.

(Preparation of lithium secondary battery)

Example 5

98 wt% of artificial graphite, 1 wt% of styrene-butadiene rubber (SBR), and 1 wt% of carboxymethyl cellulose (CMC) were mixed, added to distilled water, and then stirred by using a mechanical stirrer for 60 minutes to prepare a slurry for a negative active material slurry. The prepared slurry was applied to a thickness of about 60 μm on a 10 μm-thick copper current collector by using a doctor blade, dried in a hot-air dryer at 100 °C for 0.5 hour, dried again for 4 hours in a vacuum condition at 120 °C, and then roll-pressed to prepare a negative electrode.

97 wt% of $LiCoO_2$(LCO), 0.5 wt% of artificial graphite powder as a conductive material, 0.8 wt% of ketjen black, 0.2 wt% of acrylonitrile rubber, and 1.5 wt% of polyvinylidene fluoride (PVdF) were mixed, added to N-methyl-2-pyrrolidone, and then stirred by using a mechanical stirrer for 30 minutes to prepare a slurry for a positive electrode active material. The prepared slurry was applied to a thickness of about 60 μm on a 20 μm-thick copper current collector by using a doctor blade, dried in a hot-air dryer at 100 °C for 0.5 hour, dried again for 4 hours in a vacuum condition at 120 °C, and then roll-pressed to prepare a positive electrode.

For use as a separator, a 14 μm-thick polyethylene separator on which ceramic was coated on a positive electrode was used, and for use as an electrolyte, the electrolyte prepared according to Example 1 was used, to prepared a cylindrical-type lithium secondary battery.

**Examples 6 to 8**

Lithium secondary batteries were prepared in the same manner as in Example 5, except that the electrolytes prepared according to Examples 2 to 4 were used respectively instead of the electrolyte prepared according to Example 1.

**Comparative Examples 4 to 6**

Lithium secondary batteries were prepared in the same manner as in Example 5, except that the electrolytes prepared according to Comparative Examples 1 to 3 were used respectively instead of the electrolyte prepared according to Example 1.

**Evaluation Example 1: Discharge capacity (ratio) at low temperature (-10 °C)**

Each of the lithium secondary batteries prepared in Examples 5 to 8 and Comparative Examples 4 to 6 was charged with a constant current of 0.2 C rate at 25 °C until a voltage reached 4.4 voltage (V) (vs. Li), and was then cut-off at a current of 0.05 C rate while maintaining the voltage at 4.4 V in a constant voltage mode. Subsequently, the lithium secondary batteries were each discharged with a constant current of 0.2 C rate until the voltage reached 3.0 V (vs. Li) (formation step).

Each of the lithium secondary batteries was charged with a constant current of 0.2 C rate at 25 °C until a voltage reached 4.4 V (vs. Li), and was then cut-off at a current of 0.05 C rate while maintaining the voltage at 4.4 V in a constant voltage mode. Subsequently, after stored for 4 hours at 25 °C and -10 °C, respectively, three cells that were discharged at 25 °C and -10 °C with a constant current of 0.2 C rate until a voltage reached 3.4 V (vs. Li) were prepared. For each of the three cells, discharge capacity for each temperature (25 °C and -10 °C) was measured. The results of evaluation are shown in Table 1. The discharge capacity ratio (%) at a low temperature (-10 °C) is defined by Equation 1:

Equation 1

**Discharge capacity ratio (%) at low temperature (-10 °C) = [discharge capacity at -10 °C/charge capacity at 25 °C]**×100

Table 1

| Division | Cell No. | Discharge capacity (mAh) at 25 °C | Discharge capacity (mAh) at -10 °C | Discharge capacity ratio (%) at -10 °C |
|---|---|---|---|---|
| Example 5 | 1 | 5.00 | 3.43 | 68.5 |
| | 2 | 5.00 | 3.55 | 71.0 |
| | 3 | 5.00 | 3.43 | 68.5 |
| Example 6 | 1 | 5.03 | 3.56 | 70.8 |
| | 2 | 4.99 | 3.53 | 70.7 |
| | 3 | 5.02 | 3.56 | 70.9 |
| Example 7 | 1 | 5.00 | 3.56 | 71.2 |
| | 2 | 5.02 | 3.60 | 71.6 |
| | 3 | 5.03 | 3.60 | 71.5 |
| Example 8 | 1 | 5.02 | 3.83 | 76.2 |
| | 2 | 5.01 | 3.81 | 76.2 |
| | 3 | 4.98 | 3.63 | 72.9 |
| Comparative Example 4 | 1 | 4.99 | 3.09 | 62.0 |
| | 2 | 5.00 | 3.16 | 63.3 |
| | 3 | 4.99 | 3.11 | 62.3 |
| Comparative Example 5 | 1 | 5.05 | 3.29 | 65.3 |
| | 2 | 5.01 | 3.06 | 61.1 |
| | 3 | 5.02 | 3.15 | 62.7 |
| Comparative Example 6 | 1 | 5.12 | 3.36 | 65.6 |
| | 2 | 4.97 | 3.23 | 64.9 |
| | 3 | 4.98 | 3.25 | 65.3 |

Referring to Table 1, the discharge capacity of each of the lithium secondary batteries of Examples 5 to 8 at a low temperature (-10 °C) was higher than that of each of the lithium secondary batteries of Comparative Examples 4 to 6 (in which an additive was not used in an electrolyte, and 1 wt% and 2 wt% of the Compound 1 of Formula 13 were used) by about 3 % to about 15 %. The lithium secondary batteries of Examples 5 to 8 include an additive having a structure in which silyl groups substituted with an alkyl group (e.g., a methyl group) and an alkenyl group (e.g., an ethenyl group) are symmetrical at the center of phosphoric acid substituted with a halogen atom (e.g., fluorine) in the electrolyte. The lithium secondary batteries of Examples 5 to 8 had improved discharge capacity (ratio) at a low temperature (-10 °C) compared to the lithium secondary battery of Comparative Example 4 (in which an electrolyte was not used in the electrolyte). In addition, it was confirmed that the lithium secondary batteries of Examples 5 to 8 had improved discharge capacity (ratio) at a low temperature (-10 °C) compared to the lithium secondary batteries prepared according to Comparative Examples 5 and 6.

The additive used in the electrolyte of the lithium secondary battery of each of Examples 5 to 8 forms a cathode electrolyte interphase (CEI) film having low impedance characteristics on a surface of the positive electrode, and then forms a solid electrolyte interphase (SEI) having a high silyl group concentration on a surface of the negative electrode. Accordingly, the lithium secondary battery including the electrolyte including the additive seemed to have improved discharge capacity (ratio) at a low temperature (-10 °C).

**Evaluation Example** 2: **Charge/discharge characteristics** at **high temperature (45** °C)

Each of the lithium secondary batteries prepared in Examples 5 to 8 and Comparative Examples 4 to 6 was charged with a constant current of 1.0 C rate at 45 °C until a voltage reached 4.47 V (vs. Li), and was then cut-off at a current of 0.05 C rate while maintaining the voltage at 4.47 V in a constant voltage mode. Subsequently, the lithium

secondary batteries were each discharged with a constant current of 1.0 C rate until the voltage reached 3.0 V (vs. Li). Such a charging/discharging cycle was repeated 100 times. After every one charge/discharge cycle in all the charge/discharge cycles, there was a 10-minute pause time. The results of evaluation are shown in Table 2. The capacity retention ratio at the 100th cycle is defined by Equation 2:

Equation 2

Capacity retention ratio (%)=(discharge capacity in 100th cycle/discharge capacity in 1st cycle)×100

Table 2

| Division | Initial discharge capacity (mAh) | Discharge capacity at 100 cycle (mAh) | Capacity retention ratio (%) |
|---|---|---|---|
| Example 5 | 4.92 | 4.15 | 84.3 |
| Example 6 | 4.95 | 4.25 | 85.8 |
| Example 7 | 5.03 | 4.48 | 89.1 |
| Example 8 | 4.91 | 4.17 | 85.0 |
| Comparative Example 4 | 4.97 | 4.09 | 82.4 |
| Comparative Example 5 | 4.96 | 4.20 | 84.6 |
| Comparative Example 6 | 4.99 | 4.12 | 82.6 |

Referring to Table 2, the lithium secondary batteries of Examples 5 to 8 had high capacity retention ratio of about 0.4 % to about 7 % at 45 °C, compared to the lithium secondary batteries of Comparative Examples 4 (in which an additive was not used in the electrolyte) and Comparative Examples 5 and 6 (in which 1 wt% and 2 wt% of Compound 1 of Formula 13 were used as an additive in the electrolyte).

## Claims

**1.** An electrolyte for a lithium battery comprising:

a lithium salt;
a non-aqueous organic solvent; and
an additive comprising a compound represented by Formula 1:

Formula 1

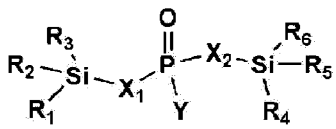

wherein, in Formula 1,

$X_1$ and $X_2$ are each independently -O- or -N-;
Y is a halogen atom or a substituted or unsubstituted C1-C10 alkoxy group; and
$R_1$, $R_2$, $R_3$, $R_4$, $R_5$, and $R_6$ are each independently a substituted or unsubstituted C1-C10 alkyl group, a substituted or unsubstituted C2-C10 alkenyl group, a substituted or unsubstituted C3-C10 alkynyl group,

a substituted or unsubstituted C3-C20 cycloalkyl group, substituted or unsubstituted C6-C50 aryl group, a substituted or unsubstituted C6-C50 alkylaryl group, or a substituted or unsubstituted C6-C50 heteroaryl group.

**2.** The electrolyte of claim 1, wherein the compound represented by Formula 1 comprises a compound represented by Formula 2:

Formula 2

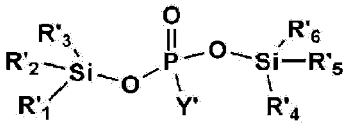

wherein, in Formula 2,

Y' is a halogen atom or a substituted or unsubstituted C1-C10 alkoxy group; and
$R'_1$, $R'_2$, $R'_3$, $R'_4$, $R'_5$, and $R'_6$ are each independently a substituted or unsubstituted C1-C10 alkyl group, a substituted or unsubstituted C2-C10 alkenyl group, a substituted or unsubstituted C3-C20 cycloalkyl group, a substituted or unsubstituted C6-C50 aryl group, or a substituted or unsubstituted C6-C50 alkylaryl group.

**3.** The electrolyte of claim 1, wherein the compound represented by Formula 1 comprises a compound represented by Formula 3:

Formula 3

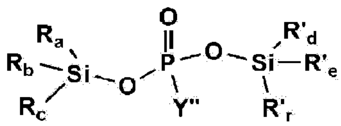

wherein, in Formula 3,

Y" is a halogen atom; and
$R_a$, $R_b$, $R_c$, $R_d$, $R_e$, and Rf are each independently an unsubstituted C1-C10 alkyl group, a C1-C10 alkyl group substituted with a halogen atom, an unsubstituted C2-C10 alkenyl group, a C2-C10 alkenyl group substituted with a halogen atom, an unsubstituted C6-C50 alkylaryl group, or a C6-C50 alkylaryl group substituted with a halogen atom.

**4.** The electrolyte of claim 1, wherein the compound represented by Formula 1 comprises a compound represented by Formulae 4 to 12:

Formula 4

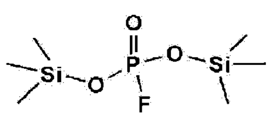

Formula 5

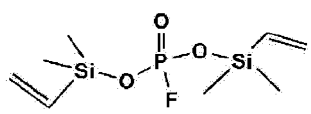

Formula 6

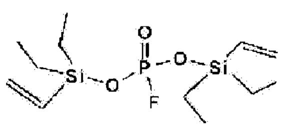

Formula 7

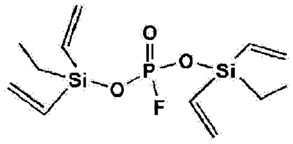

Formula 8

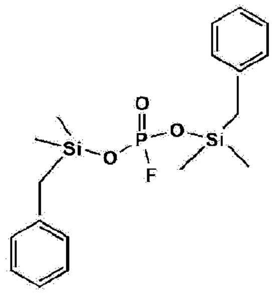

Formula 9

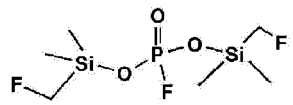

Formula 10

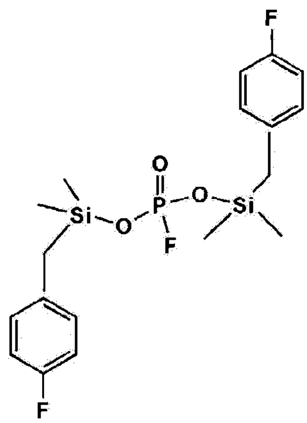

Formula 11

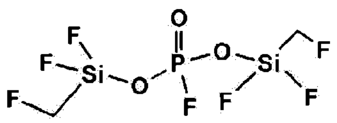

Formula 12

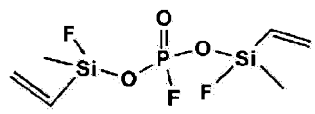

.

**5.** The electrolyte of claim 1, wherein the amount of the additive is in a range of 0.01 wt% to 10 wt% based on the total weight of the electrolyte.

**6.** The electrolyte of claim 1, further comprising a cyclic carbonate-based compound,
wherein the cyclic carbonate-based compound is selected from: fluoroethylene carbonate (FEC); FFC substituted with at least one substituent selected from a halogen atom, a cyano group (CN), and a nitro group ($NO_2$); vinylethylene carbonate (VEC); VEC substituted with at least one substituent selected from a halogen atom, CN, and $NO_2$; vinylene carbonate (VC); and VC substituted with at least one substituent selected from a halogen atom, CN, and $NO_2$.

**7.** The electrolyte of claim 6, wherein the amount of the cyclic carbonate-based compound is in a range of 0.01 wt% to 10 wt% based on the total weight of the electrolyte.

**8.** The electrolyte of claim 1, further comprising at least one selected from a sultone-based compound, a nitride-based compound, and a cyanide-based compound,

wherein the sultone-based compound is: sultone; or propane sultone substituted with at least one substituent selected from a halogen atom, a cyano group, a nitro group, a trifluoromethanesulfonyl group, a pentafluoroethanesulfonyl group ($SO_2C_2F_5$), a pentafluorophenyl group ($C_6F_5$), a methanesulfonyl group ($SO_2CF_3$), a phenylsulfonyl group ($SO_2Ph$), and a methylester group ($COOCH_3$),
the nitride-based compound is succinonitrile, and
the cyanide-based compound is 1,3,6-hexane tri-cyanide (HTCN) or 1,2,6-(HTCN).

**9.** The electrolyte of claim 8, wherein the amount of the sultone-based compound, the nitride-based compound, or the cyanide-based compound is in a range of 0.01 wt% to 10 wt% based on the total weight of the electrolyte.

**10.** A lithium battery comprising:

a positive electrode comprising a positive electrode active material;
a negative electrode comprising a negative electrode active material; and
the electrolyte according to any one of claims 1 to 9 disposed between the positive electrode and the negative electrode.

FIG. 1

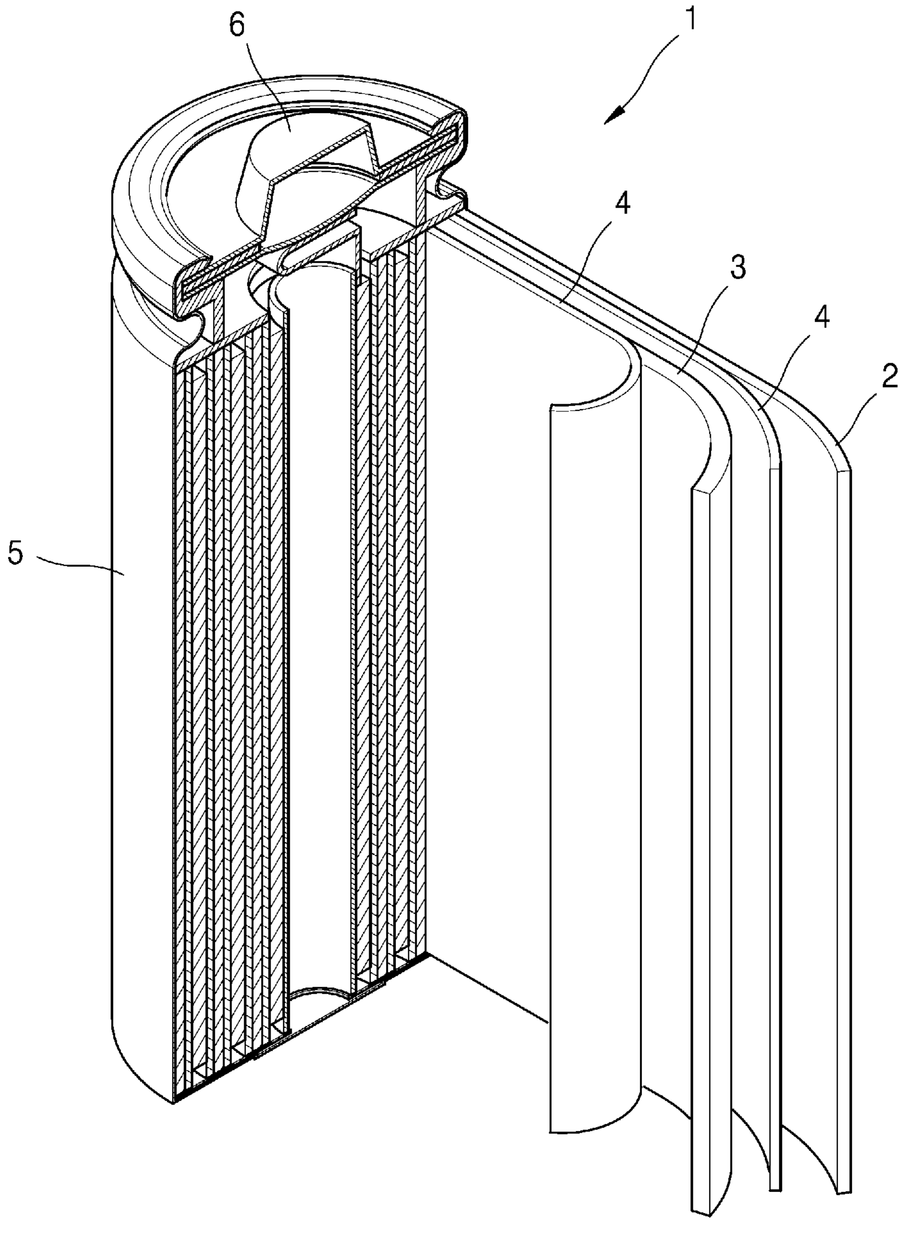

**INTERNATIONAL SEARCH REPORT**

International application No. **PCT/KR2021/018481**

**A. CLASSIFICATION OF SUBJECT MATTER**

**H01M 10/0567**(2010.01)i; **H01M 6/16**(2006.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0567(2010.01); C07F 9/09(2006.01); C07F 9/14(2006.01); H01G 11/64(2013.01); H01M 10/0525(2010.01); H01M 2/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 리튬 전지(lithium battery), 전해질(electrolyte), 비수계 유기용매(non-aqueous organic solvent), 인화합물(phosphorus compound)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2016-196452 A (ASAHI KASEI CORP.) 24 November 2016 (2016-11-24)<br>See claims 1-6 and 8; and paragraphs [0041], [0082] and [0084]. | 1,2,5-10<br>3,4 |
| X | WO 2019-220829 A1 (DAIKIN INDUSTRIES, LTD.) 21 November 2019 (2019-11-21)<br>See claims 1, 3 and 4; paragraphs [0016], [0022], [0202], [0452], [0453], [0494], [0563]-[0565] and [0571]; tables 1 and 2; and examples 8, 19 and 21. | 1-10 |
| X | KR 10-2015-0014185 A (LG CHEM, LTD.) 06 February 2015 (2015-02-06)<br>See claims 1, 3-5, 7 and 8; and paragraphs [0052]-[0055]. | 1,2,5-10 |
| X | CN 109950620 A (SHENZHEN XINYUBANG SCIENCE AND TECHNOLOGY CO., LTD.) 28 June 2019 (2019-06-28)<br>See claims 1, 4 (compound 4), 5, 6, 9 and 10. | 1,2,5-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 March 2022** | **10 March 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

INTERNATIONAL SEARCH REPORT

International application No.
**PCT/KR2021/018481**

**C. DOCUMENTS CONSIDERED TO BE RELEVANT**

| Category* | Citation of document, with indication, where appropriate, of the relevant passages | Relevant to claim No. |
|---|---|---|
| A | ROVNANI´K, P. et al. Synthesis and characterisation of trimethylsilyl phosphorohalidates: Me3SiOP(O)FX (X= Cl, Br) and (Me3SiO)2P2O3F2. Journal of fluorine chemistry. 2004, vol. 125, no. 1, pp. 83-90. See entire document. | 1-10 |
| PX | CN 112625062 A (ZHUHAI COSMX BATTERY CO., LTD.) 09 April 2021 (2021-04-09) See claims 1, 4-6 and 9; and paragraphs [0035] and [0046]. | 1-10 |

Form PCT/ISA/210 (second sheet) (July 2019)

**INTERNATIONAL SEARCH REPORT**
**Information on patent family members**

International application No.
**PCT/KR2021/018481**

| Patent document cited in search report | Publication date (day/month/year) | Patent family member(s) | Publication date (day/month/year) |
|---|---|---|---|
| JP 2016-196452 A | 24 November 2016 | None | |
| WO 2019-220829 A1 | 21 November 2019 | CN 112119528 A | 22 December 2020 |
| | | EP 3780232 A1 | 17 February 2021 |
| | | JP 2022-017428 A | 25 January 2022 |
| | | KR 10-2021-0002628 A | 08 January 2021 |
| | | US 2021-0234201 A1 | 29 July 2021 |
| KR 10-2015-0014185 A | 06 February 2015 | None | |
| CN 109950620 A | 28 June 2019 | CN 109950620 B | 14 May 2021 |
| | | WO 2019-119766 A1 | 27 June 2019 |
| CN 112625062 A | 09 April 2021 | None | |

Form PCT/ISA/210 (patent family annex) (July 2019)